# EUROPÄISCHE PATENTSCHRIFT

(11) **EP 1 581 376 B1**
(45) Veröffentlichungstag und Bekanntmachung des Hinweises auf die Patenterteilung: **31.10.2007**
(21) Anmeldenummer: 03789219.7
(22) Anmeldetag: 11.12.2003
(51) Int. Cl.: B29C 35/08, B29C 43/56, B29B 13/08, B29B 13/00, B29C 59/16, B29C 67/00

(54) **VERFAHREN UND VORRICHTUNG ZUR PLASTISCHEN VERFORMUNG VON POLYMEREN**
METHOD AND APPARATUS FOR PLASTIC DEFORMATION OF POLYMERS
PROCEDE ET APPAREIL DE DEFORMATION PLASTIQUE DE POLYMERES

(30) Priorität: 20.12.2002 DE 10260137
(43) Veröffentlichungstag der Anmeldung: 05.10.2005
(73) Patentinhaber: Schroeter, Johannes, 83109 Grosskarolinenfeld (DE); Felix, Florian, 82467 Garmisch-Partenkirchen (DE)
(72) Erfinder: Schroeter, Johannes, 83109 Grosskarolinenfeld (DE); Felix, Florian, 82467 Garmisch-Partenkirchen (DE)
(74) Vertreter: Best, Michael
(86) Internationale Anmeldenummer: PCT/EP2003/014058
(87) Internationale Veröffentlichungsnummer: WO 2004/058472

(56) Entgegenhaltungen:
- WO-A-96/18493
- WO-A-98/14314
- US-A- 4 339 303
- US-A- 4 365 060
- US-A- 5 849 035
- BUNDESAMT FÜR STRAHLENSCHUTZ: "Grundlagen und Begriffsbestimmungen"[Online] 9. Juni 2003 (2003-06-09), XP002283092 Gefunden im Internet: URL:http://www.bfs.de/uv/laser/grundlagen. html/printversion> [gefunden am 2004-06-03]
- PROF. D. SUTER: "Laserspektroskopie und Quantenoptik (Vorlesungsscript SS 2000)"[Online] 2000, XP002283093 UNI DORTMUND Gefunden im Internet: URL:http://fuj.physik.uni-dortmund.de/~sut er/Vorlesung/Laserspektroskopie_00/2_Laser .pdf> [gefunden am 2004-06-03]

## Beschreibung

Die Erfindung betrifft ein Verfahren zur plastischen Verformung von Polymeren insbesondere von Polymeren die nach herkömmlichen Verfahren nur schwer oder überhaupt nicht plastisch verformt werden können, wie Polymere, die intermolekulare Wasserstoffbrückenbindungen ausbilden und insbesondere Cellulose, Chitin und Polyvinylalkohol. Die Erfindung betrifft ebenfalls eine Vorrichtung zur Durchführung des Verfahrens sowie plastisch verformte Cellulose und plastisch verformtes Chitin, die nach dem erfindungsgemäßen Verfahren erhältlich sind.

Verfahren zur plastischen insbesondere zur thermoplastischen Verformung von Polymeren sind seit langem bekannt und werden in der Technik in erheblichem Umfang eingesetzt. Hierzu gehören neben Spritzgußverfahren insbesondere auch Extrusionsverfahren und Verfahren zur Herstellung von Chemiefasern aus Spinnschmelzen. Bei diesen Verfahren werden Polymere unter Verwendung von thermischer Energie aufgeschmolzen. Als thermische Energiequellen werden neben üblichen Heizvorrichtungen auch Infrarotstrahler und Hochfrequenzstrahler verwendet (z. B. WO 96/22867) oder auch Mikrowellen (z. B. WO 98/14314). Bei diesen bekannten Verfahren zum Aufschmelzen von Polymeren, bei denen elektromagnetische Strahlung eingesetzt wird, wird die elektromagnetische Strahlung unspezifisch eingesetzt, d.h. um dem Polymersystem Wärmeenergie zuzuführen und dementsprechend wird keine monochromatische Strahlung eingesetzt, sondern Strahlung in einem breiten Wellenlängenbereich.

Aus der WO 96/18493 ist ein Verfahren zum plastischen Verformen von thermoplastischen Polymerkörpern durch thermisches Erweichen der Polymere bekannt. Die dazu notwendige Energie wird in diesem Verfahren durch Einwirken von IR-Strahlung erzeugt, wobei zur Temperaturerhöhung keine Strahlung mit definierten Wellenlängen benötigt wird.

Während die bekannten Verfahren bei den meisten Polymeren problemlos angewandt werden können, ist die thermoplastische Verarbeitung bzw. das Aufschmelzen von Polymeren die starke intermolekulare Wechselwirkungen ausbilden, wie sie insbesondere bei Wasserstoffbrückenbindungen.auftreten, nur unter größeren Schwierigkeiten oder auch überhaupt nicht möglich.

So ist bekannt, daß Cellulose nicht schmilzt sondern oberhalb von 180° C unter Einwirkung von Sauerstoff abbaut (z.B. Ullmann's encyclopedia of industrial chemistry 5. Auflage, Band A5, 1986, 383). Der Grund hierfür ist darin zu sehen, daß die Polymerketten der Cellulose durch die nebenvalenten Wasserstoffbrückenbindungen in einem festen Kristallgitter gehalten werden, das für die thermoplastische Verarbeitung bzw. das Aufschmelzen zerstört werden muß. Bei Temperaturen, die für die thermische Lösung der Nebenvalenzbindungen erforderlich wären wird aber die Polymerkette irreversibel geschädigt. Die thermische Belastbarkeit der Molekülketten der Cellulose ist demnach nicht höher als die thermische Beständigkeit der durch die Nebenvalenzen aus Wasserstoffbrückenbindungen fixierten Gitterstruktur der Cellulose (z.B. Das Papier, 44 (1990) 12, 617-624; TAPPI Journal 67 (1984) 12, 82/83; Journal of Applied Polymer Science, 37 (1989), 3305-3314). Daher fehlt ein für die thermoplastische Verarbeitung erforderliches Temperaturintervall zwischen der Temperatur, bei der sich die zwischenmolekularen Bindungen lösen und der Temperatur, bei der die Molekülketten thermisch geschädigt werden.

Es ist zwar möglich Cellulose aus einer Lösung heraus beispielsweise zu Folien und Fasern zu verarbeiten, derartige Verfahren weisen aber eine Reihe von Nachteilen auf. So ist die Geschwindigkeit von Polymerformungsverfahren aus einer Polymerlösung heraus durch den Stofftransport (z.B. Koagulation) kontrolliert und derartige Verfahren sind von ihrer Geschwindigkeit her den thermoplastischen Prozessen bei weitem unterlegen. Zum Beispiel lassen sich Cellulosefasern nur mit einer Geschwindigkeit von bis zu ca. 100 m/min produzieren, während thermoplastische Werkstoffe bei Geschwindigkeiten von bis zu 8000 m/min zu Fasern verarbeitet werden können. Daraus resultiert ein erheblicher Kostennachteil der Cellulosefasern. Auch müssen als Lösemittel für Cellulose ungewöhnliche und gefährliche Stoffe eingesetzt werden, die hohe Verfahrenkosten verursachen. So wurde für Cellulose zunächst das Lösemittel Schwefelkohlenstoff (CS₂) verwendet, das aber in Dampfform leicht brennbar und explosiv ist und darüber hinaus toxische Eigenschaften aufweist. Auch das in jüngerer Zeit gebräuchliche N-Methylmorpholin-N-oxid (NMMO) ist nicht unproblematisch da es bei erhöhten Temperaturen explosive Peroxide bildet (Kaplan, D.L: Biopolymers from Renewable Resources, Berlin, Springer 1998, 79).

Bei Chitin, einem anderen natürlichen Polysaccharid ist die Verarbeitungssituation ähnlich schwierig, da es sich ebenfalls eher thermisch zersetzt (bei ca. 280 °C) als zu schmelzen (Kaplan, D.L.: Biopolymers from Renewable Resources, Berlin, Springer 1998, 108).

Bei beiden Naturprodukten wurde versucht das Problem der mangelnden thermoplastischen Verarbeitbarkeit durch eine chemische Modifikation zu lösen. So wird Cellulose beispielsweise zu Cellulosenitrat, -azetat, -propionat oder -butyrat verestert, was die Wasserstoffbrücken als zwischenmolekulare Bindungen schwächt. Das Verfahren ist zwar wirksam aber aufwendig und teuer. Zudem ist eine der wichtigsten Eigenschaften der Cellulose ihre gute biologische Abbaubarkeit und während die thermoplastische Verarbeitbarkeit der Cellulose mit steigendem Substitutionsgrad verbessert wird, nimmt die biologische Abbaubarkeit mit steigendem Substitutionsgrad ab (Journal of Applied Polymer Science, 50 (1993), 1739-1746). Entsprechend wird Chitin häufig vor einer technischen Anwendung zu Chitosan deacetyliert. Neben den vorstehend geschilderten Nachteilen gestaltet sich darüber hinaus die großtechnische Deacetylierung aufgrund der benötigten Mengen an Alkali ökonomisch und ökologisch problematisch:

Diese Schwierigkeiten, die bei einer thermoplastischen Verarbeitung der Cellulose und des Chitins auftreten sind besonders gravierend, da sowohl Cellulose als auch Chitin in der Natur in großen Mengen synthetisiert werden und es sich hierbei um die wichtigsten nachwachsenden Polymere handelt. Cellulose ist nach Literaturangaben der häufigste, Chitin der zweithäufigste Rohstoff der Erde (Kaplan, D.L: Biopolymers from Renewable Resources, Berlin, Springer 1998, 96).

Bei anderen Polymeren, die intermolekulare Wasserstoffbrückenbindungen aufweisen ist eine thermoplastische Verarbeitung dagegen möglich, da die Molekülketten thermisch ausreichend stabil sind, so daß das Aufschmelzen bzw. die thermoplastische Verformung bei Temperaturen erfolgen kann, bei denen sich die nebenvalenten Wasserstoffbrückenbindungen lösen. Ein typisches Beispiel hierfür ist Polyamid 6, bei dem die kristalline Anordnung der Molekülketten bei 230°C durch Auflösung der Wasserstoffbrückenbindungen schmilzt (Domininghaus, H.: Die Kunststoffe und ihre Eigenschaften, 5. Auflage, Springer, Berlin 1998, 616). Da die Molekülketten des Polyamid 6 Temperaturen bis zu 300°C ausgesetzt werden können ehe sie thermisch geschädigt werden, ist es möglich, Polyamid 6 aufzuschmelzen bzw. thermisch zu verformen. In der Praxis liegen typische Verarbeitungstemperaturen bei 230°C bis 280°C.

Obwohl bei derartigen Polymeren die thermoplastische Verarbeitung möglich ist und in großem Umfang durchgeführt wird, sind die hohen Temperaturen, die hierfür erforderlich sind, nicht vorteilhaft. Es besteht Bedarf nach einem Verfahren, mit dem auch diese prinzipiell thermoplastisch verarbeitbaren Polymere unter Einsatz von weniger Energie aufgeschmolzen und plastisch verarbeitet werden können.

Die geschilderten Schwierigkeiten bei der thermoplastischen Verarbeitung treten z.B. auch bei Polyvinylalkohol auf.

Aufgabe der Erfindung ist es daher, ein neues Verfahren zur plastischen Verformung eines Polymers zur Verfügung zu stellen, mit dem insbesondere auch solche Polymere verarbeitet werden können, die aufgrund starker intermolekularer Wechselwirkungen, wie insbesondere aufgrund von Wasserstoffbrückenbindungen, mit herkömmlichen Verfahren nur schwer oder gar nicht aufgeschmolzen bzw. plastisch verformt werden können.

Aufgabe der Erfindung ist es ferner, eine Vorrichtung zur Durchführung eines solchen Verfahrens zur Verfügung zu stellen.

Schließlich ist es eine Aufgabe der Erfindung, die bislang thermoplastisch nicht verformbaren Polymere Cellulose und Chitin in einer neuen Modifikation zur Verfügung zu stellen, wie sie sich bei der plastischen Verformung gemäß dem erfindungsgemäßen Verfahren ausbildet.

Diese Aufgaben werden durch ein Verfahren zum plastischen Verformen von Polymeren gelöst, das dadurch gekennzeichnet ist, daß ein Polymer unter gleichzeitiger Einwirkung von Druckkraft und Scherkraft sowie thermischer Energie mit elektromagnetischer Strahlung mit einer definierten Wellenlänge im Bereich von 0,8 bis 100 µm behandelt wird. Es wird ebenfalls eine Vorrichtung zur Durchführung dieses Verfahrens zur Verfügung gestellt, die Mittel zur Aufnahme eines Polymers, Mittel zur Ausübung von Druckkraft auf das Polymer, Mittel zur Ausübung von Scherkraft auf das Polymer und Mittel zum Zuführen oder Ableiten von Wärme sowie Mittel zur Bestrahlung des Polymers mit elektromagnetischer Strahlung mit einer definierten Wellenlänge im Bereich von 0,8 bis 100 µm umfaßt.

Schließlich stellt das Verfahren auch ein Polymer zur Verfügung, das Cellulose oder Chitin enthält und das mit dem erfindungsgemäßen Verfahren hergestellt werden kann.

Im Rahmen der vorliegenden Erfindung beziehen sich Prozentangaben auf Gewichtsprozent und Molekulargewichte von Polymeren auf zahlengemittelte Molekulargewichte, sofern nichts anderes angegeben ist.

Anders als bei den Verfahren des Standes der Technik, wie sie beispielsweise in der WO 96/22867 und der WO 98/14314 beschrieben sind, die elektromagnetische Strahlung und auch Infrarotstrahler (WO 96/22867) als Wärmequellen einsetzen und damit keine elektromagnetische Strahlung einer spezifisch definierten Wellenlänge verwenden, sondern in der Regel breitbandige elektromagnetische Strahlung (diese ist zur Übertragung von Wärme an ein System am geeignetesten), wird bei dem erfindungsgemäßen Verfahren das zu bearbeitende Polymer selektiv mit elektromagnetischer Strahlung einer definierten Wellenlänge, d.h. im wesentlichen monochromatischer Strahlung, behandelt, wobei die Wellenlänge aus einem Bereich von 0,8 µm bis 100 µm ausgewählt ist.

Die folgenden Ausführungen zu Vorgängen in dem zu verformenden Polymer erläutern die Erfindung, die Erfindung ist aber nicht auf die angenommenen Mechanismen eingeschränkt.

Das erfindungsgemäße Verfahren beruht auf dem Prinzip, daß die nebenvalenten Bindungen in Polymeren, insbesondere Wasserstoffbrückenbindungen, gezielt nichtthermisch aufgebrochen werden. Hierzu wird das Polymer drei verschiedenen Arten von Energie ausgesetzt, nämlich Energie aus elektromagnetischer Strahlung einer geeigneten Wellenlänge, mechanischer Energie und thermischer Energie. Es wird derzeit angenommen, daß bei dem erfindungsgemäßen Verfahren die Wasserstoffbrückenbindungen durch mechanische und thermische Energie geschwächt werden. Die über die elektromagnetische Strahlung in das System eingebrachte Energie führt dann dazu, daß die Wasserstoffbrückenbindungen aufgebrochen werden. Durch die auf das Polymer einwirkende Scherkraft wird das Polymer dann plastisch verformt. Wenn der Energieeintrag gestoppt wird und die plastische Verformung zum Stillstand kommt, gehen die Moleküle neue Wasserstoffbrückenbindungen ein.

Mit dem erfindungsgemäßen Verfahren ist es möglich, die thermoplastische Verformung von Polymeren, die Nebenvalenzbindungen zeigen, insbesondere Wasserstoffbrückenbindungen, bei Temperaturen zu erreichen, die deutlich unter den Temperaturen liegen, die üblicherweise zum Aufbrechen der Nebenvalenzbindungen, insbesondere der intermolekularen Wasserstoffbrückenbindungen erforderlich sind. Damit können mit dem erfindungsgemäßen Verfahren erstmals auch Polymere plastisch verformt werden, bei denen die intramolekularen kovalenten Bindungsenergien in der gleichen Größenordnung (oder sogar darunter) liegen, wie die Energien der intermolekularen Wasserstoffbrückenbindungen, insbesondere Cellulose und Chitin. Insbesondere ist es mit dem erfindungsgemäßen Verfahren erstmals gelungen, Cellulose plastisch zu verformen und in eine durchsichtige, klare Folie zu überführen.

Die Erfindung macht sich zu Nutze, daß nebenvalente Bindungen, insbesondere Wasserstoffbrückenbindungen, elektromagnetische Strahlung mit einer Energie im infraroten Bereich absorbieren. Bei diesen Wellenlängen ist eine Zerstörung der kovalenten Polymerbindungen durch die elektromagnetische Strahlung nicht zu befürchten. Die zugeführte elektromagnetische Strahlung sollte daher eine Wellenlänge von mehr als 800 nm d.h. 0,8 µm aufweisen. Energiereichere Strahlung kann zum einen von den nebenvalenten Bindungen, insbesondere den Wasserstoffbrückenbindungen, nicht mehr ohne weiteres absorbiert werden, zum anderen wird durch die Verwendung energiereicherer Strahlung das Risiko erhöht, daß das Polymer sich chemisch verändert. Andererseits werden die nebenvalenten Bindungen, insbesondere die Wasserstoffbrückenbindungen, erfindungsgemäß durch Zufuhr von mechanischer Energie und von Wärmeenergie geschwächt, so daß unter Umständen bereits elektromagnetische Strahlung mit einer sehr geringen Energie ausreichend ist um das erfindungsgemäße Verfahren erfolgreich durchführen zu können. Wenn die Wellenlänge der zugeführten elektromagnetischen Strahlung jedoch höher als 100 µm ist, ist sie in der Regel zu energiearm, um die nebenvalenten Bindungen, insbesondere Wasserstoffbrückenbindungen, aufzubrechen. Daher wird bei dem erfindungsgemäßen Verfahren elektromagnetische Strahlung mit einer. Wellenlänge im Bereich von 0,8 µm bis 100 µm eingesetzt. Die konkret gewählte Wellenlänge hängt dabei von dem zu verarbeitenden Polymer und den übrigen Reaktionsbedingungen ab, insbesondere von der über die Scherkraft in das System eingebrachten Energie und von der möglicherweise ergänzend zugeführten thermischen Energie.

Die für das erfindungsgemäße Verfahren am besten geeignete Wellenlänge kann für jedes Polymer und jede Versuchsanordnung durch einige Routineversuche ermittelt werden. Zum Beispiel kann durch spektroskopische Verfahren bestimmt werden, in welchem Wellenlängenbereich die nebenvalenten Bindungen des zu verarbeitenden Polymers absorbieren. Ausgehend von den so ermittelten Werten wird dann durch geeignete Routineversuche die zur Durchführung des erfindungsgemäßen Verfahrens optimale Wellenlänge bestimmt.

Alternativ lassen sich auch aus den Bindungsenergien der Wasserstoffbrückenbindungen Quantenenergien (Photonenenergien) berechnen, die eine elektromagnetische Strahlung aufweisen müßte um die nebenvalenten Bindungen zu brechen. Aus diesen Berechnungen erhält der Fachmann einen Ausgangswert für die geeignete Wellenlänge der in dem erfindungsgemäßen Verfahren einzusetzenden elektromagnetischen Strahlung aufgrund dessen mit einfachen Routineversuchen die für die plastische Verformung des gewählten Polymers am besten geeignete Wellenlänge ermittelt werden kann.

In der Regel dürften die Strahlungsquanten etwas energieärmer bzw. die Wellenlänge der eingesetzten elektromagnetischen Strahlung etwas größer sein, als es sich aufgrund der vorstehend beschriebenen spektroskopischen Messungen und theoretischen Berechnungen ergibt, da bei dem erfindungsgemäßen Verfahren die nebenvalenten Bindungen noch zusätzlich durch mechanische und thermische Belastung geschwächt werden. Da sich die Bindungsenergien bei einer Vergrößerung des Bindungsabstands r proportional 1/rⁿ (mit n > 1) entwickeln, bringen schon geringe Dehnungen der Bindungsabstände deutlich niedrigere Bindungsenergien mit sich. Dem entspricht längerwellige und damit energieärmere Strahlung.

Damit wird erfindungsgemäß das Polymer mit elektromagnetischer Strahlung einer definierten Wellenlänge behandelt, die bevorzugt der Bindungsenergie der nebenvalenten Bindungen des Polymers (insbesondere der Wasserstoffbrückenbindungen) entspricht.

Erfindungsgemäß besonders bevorzugt wird elektromagnetische Strahlung mit einer Wellenlänge im Bereich von 1 µm bis 50 µm verwendet. Insbesondere bevorzugt ist elektromagnetische Strahlung mit einer Wellenlänge im Bereich von 1 µm bis 20 µm und insbesondere von etwa 10 µm. Weitere bevorzugte Bereiche, in denen die geeignete Wellenlänge liegt, sind 0,8 µm bis 50 µm, 0,8 µm bis 20 µm, 0,8 µm bis 15 µm und 1 µm bis 15 µm.

Aus praktischen Gründen ist es sinnvoll, zur Erzeugung der elektromagnetischen Strahlung einen Laser einzusetzen, was erfindungsgemäß bevorzugt ist. Besonders bevorzugt ist ein Kohlendioxidlaser, der Strahlung einer Wellenlänge von 10,6 µm zur Verfügung stellt.

Die erforderliche Energiemenge (Intensität der elektromagnetischen Strahlung) hängt sehr stark von der speziellen Vorrichtung ab, in der die plastische Verformung des Polymers durchgeführt werden soll, sowie von dem Polymerdurchsatz. Häufig ist bereits eine Strahlintensität von 10² W/cm² oder darunter ausreichend. Es kann allerdings erforderlich oder vorteilhaft sein, eine höhere Strahlintensität zu verwenden. Bevorzugt ist die Strahlenintensität aber nicht höher als 10⁵. W/cm². Besonders bevorzugt ist eine Strahlenintensität von 5 x 10² W/cm² bis 10⁴ W/cm² und insbesondere von 10³ W/cm² bis 10° W/cm², z.B. etwa 10³ W/cm².

Bei dem Einsatz eines Lasers kann der Strahl gepulst oder kontinuierlich sein, bevorzugt ist der Strahl gepulst.

Die Bestrahlung sollte auf eine Art und Weise erfolgen, daß eine ausreichende Absorption der Strahlung in dem Polymer erfolgt. Bevorzugt ist die Absorption in einem Bereich von 1 kJ/mol bis 10000 kJ/mol, stärker bevorzugt von 5 kJ/mol bis 1000 kJ/mol, insbesondere 5 bis 30 kJ/mol, z.B. circa 20 kJ/mol.

Die mechanische Energie wird auf an sich bekannte Art und Weise in das System eingebracht. Durch die Scherkraft wird das Polymer einer mechanischen Schubspannung ausgesetzt, durch die die nebenvalenten Bindungen zusätzlich beansprucht und geschwächt werden. Sobald sich hinreichend viele nebenvalente Bindungen öffnen, wird das Material durch die Schubspannung plastisch verformt. Die plastische Verformung ist damit eine Scherverformung. Wenn die plastische Verformung zum Stillstand kommt, gehen die Moleküle neue nebenvalente Bindungen, z.B. Wasserstoffbrückenbindungen, ein.

Bevorzugt wird die Scherkraft mit einer Kraft oder einem Drehmoment angewendet, die eine Schergeschwindigkeit im Bereich von 10° s⁻¹ bis 10⁶ s⁻¹ bewirken, bevorzugt von 10¹ bis 10⁵ s⁻¹, insbesondere von 10¹ s⁻¹ bis 10³ s⁻¹ beispielsweise etwa 10² s⁻¹.

Neben der Scherkraft wird auch eine Druckbelastung auf das Polymer ausgeübt, die die Gefahr der Bruchbildung in dem Werkstoff während der Verarbeitung senkt und den Erhalt einer zusammenhängenden Formmasse bewirkt.

Bevorzugt wird eine Druckkraft von 1 N/mm² bis 5000 N/mm² bevorzugt von 10 N/mm² bis 1000 N/mm² und insbesondere von 50 bis 500 N/mm² auf das Polymer ausgeübt.

Druckkraft und Scherkraft bringen im Zusammenspiel mechanische Energie in das Polymersystem ein. Die Druckbelastung wird bevorzugt ebenfalls dazu verwendet, um die Scherkraft über den Effekt der Reibung in das Polymer zu übertragen. Erfindungsgemäß bevorzugt erfolgt dies über 2 parallele Stempelflächen, zwischen denen sich das Polymer befindet und über die Druckkraft auf das Polymer ausgeübt wird. Eine relative Bewegung der Stempeloberflächen gegeneinander unter Druck bewirkt dann die Übertragung von Scherkraft auf das Polymer.

Auch bei bekannten Vorrichtungen zum plastischen Verformen von Polymeren wie beispielsweise Extrudern wird gleichzeitig eine Druckkraft und Scherkraft auf das zu verarbeitende Polymer ausgeübt. Erfindungsgemäß kann jede bekannte zum thermoplastischen Verformen oder Aufschmelzen von Polymeren geeignete Vorrichtung, mit der Druckkraft und Scherkraft auf ein Polymer übertragen werden, nach einer entsprechenden Anpassung zur Durchführung des erfindungsgemäßen Verfahrens verwendet werden.

Bei dem erfindungsgemäßen Verfahren ist weiterhin wesentlich, daß thermische Energie auf das Polymer einwirkt. Während thermische Energie alleine nicht tauglich ist, um die nebenvalenten Bindungen (z.B. die Wasserstoffbrückenbindungen) der Polymere aufzulösen, schwächt sie, wie auch die mechanische Energie, die nebenvalenten Bindungen. Einem System, auf das Druckkraft und Scherkraft ausgeübt wird, wird gleichzeitig notwendigerweise auch thermische Energie zugeführt. Bei dem erfindungsgemäßen Verfahren wird zudem durch die elektromagnetische Strahlung dem Polymer weitere thermische Energie zugeführt. Daher ist es häufig nicht erforderlich, dem System noch gesondert thermische Energie zuzuführen. Falls dies erforderlich ist, kann dies z.B. über ein vorgewärmtes Material oder eine Beheizung der Werkzeuge erfolgen. Andere Methoden hierzu sind dem Fachmann bekannt.

Da das erfindungsgemäße Verfahren insbesondere auch dazu dient, Polymere plastisch zu verformen, die keinen hohen Temperaturen ausgesetzt werden dürfen, kann es sogar erforderlich sein, während es Verfahrens thermische Energie abzuführen, falls die durch Scherkraft und Strahlung in das Polymer eingebrachte thermische Energie zu einer Temperaturerhöhung führt, bei der das zu verarbeitende Polymer nicht mehr stabil ist. In diesem Fall sollte während des Verfahrens gekühlt werden. In einer bevorzugten Ausführungsform des erfindungsgemäßen Verfahrens wird das zu verarbeitende Polymer während der Verarbeitung durch Abfuhr von Wärme gekühlt.

Erfindungsgemäß wird das Verfahren daher bevorzugt so durchgeführt, daß die Temperatur des Polymers überwacht und durch Zufuhr oder Ableitung von Wärme in einem vorbestimmten Bereich gehalten wird. Welche Temperatur geeignet ist, hängt sehr stark von der thermischen Stabilität des zu verarbeitenden Polymers sowie von wirtschaftlichen Überlegungen ab. Erfindungsgemäß bevorzugt liegt die Temperatur während der plastischen Verformung des Polymers bei 20 bis 280 °C, wobei der höhere Temperaturbereich für empfindliche Polymere nicht beeignet ist, allerdings beispielsweise bei der Verarbeitung von Polyamid 6 noch verwendet werden kann. Bevorzugter ist ein Bereich von 20°C bis 250°C und thermisch empfindliche Polymere, wie Cellulose, werden bevorzugt bei einer Temperatur in einem Bereich von 20°C bis 120°C, stärker bevorzugt von 50°C bis 100°C, verarbeitet.

Erfindungsgemäß bevorzugt wird das Verfahren bei einer Temperatur von T ≤ Tm/z - 20 °C, stärker bevorzugt bei einer Temperatur von T ≤ Tm/z - 40 °C, stärker bevorzugt bei einer Temperatur von T ≤ Tm/z - 60 °C durchgeführt, wobei Tm/z die Temperatur ist, bei der das Polymer schmilzt bzw. falls das Polymer zersetzt wird, bevor es schmilzt, die Temperatur darstellt, bei der sich das Polymer zersetzt. Diese Temperatur beträgt bei Cellulose beispielsweise 180 °C (hierbei handelt es sich um die Zersetzungstemperatur), bei Polyamid 230 °C (die Schmelztemperatur).

Die Polymere, die mit dem erfindungsgemäßen Verfahren plastisch verformt werden können, sind nicht besonders eingeschränkt. Zwar ist das erfindungsgemäße Verfahren besonders vorteilhaft zur Verarbeitung von thermisch empfindlichen Polymeren geeignet, die starke intermolekulare Wechselwirkungen (d.h. nebenvalente Bindungen), insbesondere Wasserstoffbrückenbindungen, ausbilden, es können aber auch Polymere, die thermisch stabil sind, wie Polyamid 6 oder Polymere, die schwächere intermolekulare Wechselwirkungen ausbilden, mit dem erfindungsgemäßen Verfahren verarbeitet werden, wobei sich gegenüber den herkömmlichen Verfahren durchaus verfahrenstechnische Vorteile ergeben können wie eine verringerte Verarbeitungstemperatur.

Der Begriff Polymer wie er im Rahmen dieser Patentanmeldung verwendet wird, umfaßt einzelne Polymere sowie Gemische mehrerer Polymerer, insbesondere Gemische, die ein oder mehrere Polymere enthalten, die starke nebenvalente Bindungen, insbesondere Wasserstoffbrückenbindungen, aufweisen. Den Polymeren können Additive beigefügt sein, welche die Verarbeitungs- oder Anwendungseigenschaften der Polymere beeinflussen. Derartige Additive sind dem Fachmann bekannt, z.B. können hier Glycerin, Sorbitol oder Farbstoffe genannt werden. Mit dem Begriff Polymer sind sowohl Homopolymere als auch Copolymere gemeint. Weder das mittlere Molekulargewicht des Polymers noch die Molekulargewichtsverteilung unterliegt besonderen Beschränkungen. In der Regel weisen die Polymere 20 oder mehr Monomereinheiten, bevorzugt 60 oder mehr Monomereinheiten, insbesondere 80 oder mehr Monomereinheiten pro Polymermolekül auf. Besonders bevorzugt weisen die Polymere etwa 300 bis 44.000 Monomereinheiten pro Polymermolekül auf, insbesondere wenn es sich bei dem Polymer um Cellulose handelt. Erfindungsgemäß besonders bevorzugt umfaßt das zu verarbeitende Polymer zumindest ein Polymer, das intermolekulare Wasserstoffbrückenbindungen ausbilden kann, insbesondere ein Polysaccharid oder einen Polyvinylalkohol. Besonders bevorzugt werden mit dem erfindungsgemäßen Verfahren Polymere verarbeitet, die zumindest ein Polymer umfassen bei dem es sich um Cellulose, Chitin, Polyvinylalkohol, ein Konstitutionsisomeres der Cellulose oder ein Konstitutionsisomeres des Chitins, besonders bevorzugt - um Cellulose oder Chitin, handelt. Erfindungsgemäß besonders bevorzugt besteht das Polymer zu 10% oder mehr, stärker bevorzugt zu 30% oder mehr, stärker bevorzugt zu 60% oder mehr, stärker bevorzugt zu 75% oder mehr, am meisten bevorzugt zu 90% oder mehr aus Cellulose oder Chitin.

Erfindungsgemäß ebenfalls bevorzugt besteht das Polymer zu 70% oder mehr, stärker bevorzugt zu 80% oder mehr, am meisten bevorzugt zu 90% oder mehr aus einem Gemisch aus Cellulose und Hemicellulose, wobei der Anteil an Hemicellulose bevorzugt 20% oder weniger, stärker bevorzugt 15% oder weniger, am meisten bevorzugt 10% oder weniger ist. Eingesetzt werden kann auch Zellstoff, der überwiegend aus Cellulose besteht (z.B. Römpp Chemie-Lexikon, 9. Auflage, Band 6, 1992, 5113).

Cellulose und Chitin sind Naturprodukte, die häufig, ohne daß dies die Durchführung des Verfahrens stört, auch niedermolekulare Verunreinigungen aufweisen können, bevorzugt jedoch nicht mehr als 50%, stärker bevorzugt nicht mehr als 20%, am stärksten bevorzugt nicht mehr als 10%. Übliche natürliche Verunreinigungen der Cellulose sind z.B. Lignin sowie in Einzelfällen natürlich vorkommende Stoffe, wie z.B. Kieselsäuren. Erfindungsgemäß bevorzugt wird als Polymer auch im wesentlichen reine (bevorzugt reine) Cellulose, z.B. Zellstoff und im wesentlichen reines (bevorzugt reines) Chitin, gegebenenfalls zusammen mit geeigneten Additiven, wie vorstehend ausgeführt, eingesetzt.

Ein besonderer Vorzug des erfindungsgemäßen Verfahrens kann darin gesehen werden, daß es mit an sich bekannten Verfahren zum thermoplastischen Verformen oder Aufschmelzen von Polymeren kombiniert werden kann, wie insbesondere Extrusionsverfahren, Verfahren zum Spinnen von Fasern und Spritzgußverfahren. Bei Extrusionsverfahren wird bereits durch den Extruder Druckkraft und Scherkraft auf das Polymer ausgeübt. Extruder sind üblicherweise auch bereits mit einer Vorrichtung zum Zuführen bzw. zum Ableiten von Wärme ausgestattet. Bei der Extrusion muß das zu verarbeitende Polymer daher in der Regel zusätzlich nur noch elektromagnetischer Strahlung ausgesetzt werden, um das erfindungsgemäße Verfahren durchzuführen. Durch das Extrusionsverfahren können erfindungsgemäß insbesondere Folien oder Fasern hergestellt werden.

Erfindungsgemäß ebenfalls bevorzugt sind z.B. Verfahren, bei denen mit Hilfe des erfindungsgemäßen Verfahrens eine Polymerschmelze hergestellt wird, die dann auf übliche Art und Weise weiterverarbeitet wird, beispielsweise zu Folien oder Fasern.

Schließlich kann das erfindungsgemäße Verfahren mit einem an sich bekannten Spritzgußverfahren kombiniert werden. Hier wird ähnlich wie bei der Kombination mit einem Spinnverfahren zunächst unter Verwendung des erfindungsgemäßen Verfahrens das Polymer aufgeschmolzen und anschließend einem üblichen Spritzgußverfahren unterworfen. Damit sich das zu verarbeitende Polymer nicht wieder unter Ausbildung der ursprünglich vorhanden Wasserstoffbrückenbindungen in die ungünstige kristalline Struktur umformt, sollte das Spritzgießen unmittelbar erfolgen, nachdem das Polymer mit dem erfindungsgemäßen Verfahren aufgeschmolzen wurde.

Erfindungsgemäß wird ebenfalls eine Vorrichtung zur Durchführung des erfindungsgemäßen Verfahrens zur Verfügung gestellt. Die erfindungsgemäße Vorrichtung, die zur Durchführung des erfindungsgemäßen Verfahrens geeignet ist, weist Mittel zur Aufnahme eines Polymers, Mittel zur Ausübung von Druckkraft auf das Polymer, Mittel zur Ausübung von Scherkraft auf das Polymer, Mittel zum Zuführen oder Ableiten von Wärme und Mittel zur Bestrahlung des Polymers mit elektromagnetischer Strahlung mit einer Wellenlänge mit 0,8 bis 100 µm auf.

Bevorzugt werden die Mittel, die Druckkraft auf das Polymer ausüben, auch dazu verwendet, um Scherkraft auf das Polymer auszuüben. Besonders bevorzugt handelt es sich bei diesen Mitteln um zwei Stempel, deren Oberflächen relativ zueinander beweglich sind. Auch eine Extruderschnecke ist bevorzugt.

Erfindungsgemäß bevorzugt handelt es sich bei den Mitteln zur Bestrahlung des Polymers mit elektromagnetischer Strahlung um einen Laser, wie er bereits vorstehend beschrieben wurde.

Mittel zum Zuführen oder Ableiten von Wärme sind dem Fachmann bekannt. Bevorzugt handelt es sich bei solchen Mitteln um Heiz- und Kühlmanschetten, die auf geeignete Art und Weise an der erfindungsgemäßen Vorrichtung angebracht sind.

Mit dem erfindungsgemäßen Verfahren wurde es erstmals möglich, Polymere, die Cellulose und Chitin enthalten, plastisch zu verformen. Hierbei werden Wasserstoffbrückenbindungen aufgebrochen, die sich nach der Verformung auf andere Art und Weise wieder zusammenfügen. Das mit dem erfindungsgemäßen Verfahren verformte Polymer, das Cellulose oder Chitin enthält, bevorzugt zu 10% oder mehr, stärker bevorzugt zu 30% oder mehr, stärker bevorzugt zu 60% oder mehr, stärker bevorzugt zu 75% oder mehr, stärker bevorzugt zu 90% oder mehr oder ausschließlich aus Cellulose oder Chitin besteht, ist daher in seiner physikalischen Struktur von den Polymeren verschieden, die für das Verfahren eingesetzt wurden. Zwar ist es möglich, Cellulose und Chitin aus einer Lösung heraus zu verarbeiten, wobei ebenfalls eine Umbildung der Wasserstoffbrückenbindungen erfolgt, allerdings ist die Struktur der aus Lösung erhaltenen Polymere von der Struktur der nach dem erfindungsgemäßen Verfahren verformten Polymere verschieden. Darüber hinaus erhalten Polymere, die aus einer Lösung heraus verarbeitet wurden, notwendigerweise eingelagert Spuren von Lösemittel, die bei den mit dem erfindungsgemäßen Verfahren verformten Polymeren nicht vorhanden sind. Daher ist die mit dem erfindungsgemäßen Verfahren thermoplastisch verformte Cellulose und das mit dem erfindungsgemäßen Verfahren thermoplastisch verformte Chitin, wie es vorstehend definiert wurde, gegenüber den bekannten Formen der Cellulose und des Chitins neu.

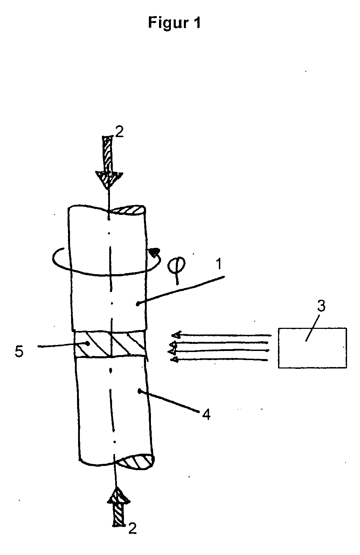

Die Erfindung wird unter Bezugnahme auf Figur 1 durch das nachstehende Beispiel näher erläutert. Das Beispiel ist nicht einschränkend.

In Figur 1 bezeichnet
- Bezugzeichen 1:: Einen Stempel, der um seine Längsachse 2 rotieren kann
- Bezugzeichen 2:: Die Längsachse der Stempel 1 und 4
- Bezugzeichen 3:: Einen CO₂-Laser der elektromagnetische Strahlung mit einer Wellenlänge von 10,6 µm emittieren kann
- Bezugzeichen 4:: Einen feststehenden Stempel mit der Längsachse 2
- Bezugzeichen 5:: Das zu verformende Polymer

### Beispiel

Kommerziell erhältliche Wattefasern aus Baumwolle, die zu mehr als 90% aus Cellulose und zu mehr als 5 % aus Hemicellulose bestehen (Ullmann's encyclopedia of Industrial Chemistry, 5. Auflage, 1986, 391) werden in einer üblichen Presse zu Zylindern mit einem Durchmesser von 3 mm und einer Höhe von 2 mm verdichtet. Dabei bleibt die Faserstruktur erhalten. Die Preßkraft beträgt 1178 N, die Preßdauer 3 Sekunden. Hierdurch entsteht die im wesentlichen aus Cellulose bestehende Polymerprobe 5.

Die Polymerprobe 5 wird zwischen zwei zylindrische Stempel 1 und 4 gebracht, die auf einer gemeinsamen geometrischen Symmetrieachse 2 liegen. Die Stempel haben einen Durchmesser von 3 mm und werden mit einer Kraft von 1178 N zusammengepreßt. Dadurch üben sie einer Druckkraft von 167 N/mm² auf die Polymerprobe 5 aus.

Zur Durchführung des Verfahrens wird zunächst der Stempel 1 in eine Rotation um die eigene Längsachse 2 versetzt und zwar mit einer Drehgeschwindigkeit von einer Umdrehung pro Sekunde. Anschließend wird die Polymerprobe von dem Laser 3 mit elektromagnetischer Strahlung bestrahlt. Der Laser 3 ist ein CO₂-Laser mit einer Wellenlänge von 10,6 µm und einer Strahlleistung von 280 W. Der Laserstrahl hat am Ort der Bearbeitung einen wirksamen Durchmesser von 5 mm. Hieraus ergibt sich eine Strahlintensität von 1,4 × 10³ W/cm². Der Strahl wird mit einer Pulsrate von 10 kHz gepulst. Die Bestrahlung dauert 7 Sekunden. Die Rotation des Stempels 1 in Relation zum Stempel 4 und die Druckkraft werden während dieser Bestrahlzeit aufrechterhalten. Unter Wirkung des Laserstrahls verbrennen Wattefasern, die seitlich zwischen den Stempeln hervorragen.

Während des gesamten Verfahrens wurde die Vorrichtung gekühlt und auf einer Temperatur von konstant 100 °C gehalten.

Nach dem Abschalten der Strahlung und der Rotation werden die Stempel 1, 4 auseinander gefahren. Zwischen den Stempeln 1, 4 befindet sich eine dünne, transparente Scheibe von zusammenhängendem folienförmigem Material. Die Folie war klar und wies keine Verfärbung auf. Die ursprüngliche Faserstruktur wurde in ein zusammenhängendes Kontinuum umgewandelt. Eine chemische Veränderung der Cellulose fand nicht statt.

## Patentansprüche

1. Verfahren zur plastischen Verformung von Polymeren, **dadurch gekennzeichnet, daß** ein Polymer unter gleichzeitiger Einwirkung von Druckkraft, Scherkraft und thermischer Energie mit elektromagnetischer Strahlung mit einer definierten Wellenlänge im Bereich von 0,8 bis 100 µm behandelt wird.

2. Verfahren nach Anspruch 1, **dadurch gekennzeichnet, daß** während des Verfahrens dem Polymer Wärme zugeführt wird oder Wärme von dem Polymer abgeführt wird.

3. Verfahren nach Anspruch 1 oder 2, **dadurch gekennzeichnet, daß** es sich bei der elektromagnetischen Strahlung um Laserstrahlung handelt.

4. Verfahren nach einem der Ansprüche 1 bis 3, **dadurch gekennzeichnet, daß** die elektromagnetische Strahlung eine Wellenlänge im Bereich von 1 bis 50 µm aufweist.

5. Verfahren nach einem der Ansprüche 1 bis 4, **dadurch gekennzeichnet, daß** die auf das Polymer einwirkende Druckkraft in einem Bereich von 1 N/mm² bis 5000 N/mm² liegt.

6. Verfahren nach einem der Ansprüche 1 bis 5, **dadurch gekennzeichnet, daß** die Scherkraft so angewendet wird, daß eine Schergeschwindigkeit im Bereich von 10° bis 10⁶ S⁻¹ auf das Polymer einwirkt.

7. Verfahren nach einem der Ansprüche 1 bis 6, **dadurch gekennzeichnet, daß** das Polymer ein Polymer umfaßt, das intermolekulare Wasserstoffbrückenbindungen ausbilden kann.

8. Verfahren nach Anspruch 7, **dadurch gekennzeichnet, daß** das Polymer, das intermolekulare Wasserstoffbrückenbindungen ausbilden kann, ein Polysaccharid oder ein Polyvinylalkohol ist.

9. Verfahren nach Anspruch 8, **dadurch gekennzeichnet, daß** das Polymer, das intermolekulare Wasserstoffbrückenbindungen ausbilden kann, Cellulose, Chitin, Polyvinylalkohol, ein Konstitutionsisomeres der Cellulose, ein Konstitutionsisomeres des Chitins oder ein Gemisch aus einem oder mehreren der vorstehenden Polymere ist.

10. Verfahren nach Anspruch 9, **dadurch gekennzeichnet, daß** das Polymer, das intermolekulare Wasserstoffbrückenbindungen ausbilden kann, Cellulose ist.

11. Verfahren nach einem der Ansprüche 1 bis 10, **dadurch gekennzeichnet, daß** das Polymer unter gleichzeitiger Einwirkung von Druckkraft, Scherkraft und thermischer Energie mit elektromagnetischer Strahlung mit einer Wellenlänge im Bereich von 0,8 bis 100 µm aufgeschmolzen und anschließend zu Folien extrudiert, zu Fasern versponnen oder durch Spritzgießen zu einem Formkörper verarbeitet wird.

12. Vorrichtung zur Durchführung des Verfahrens nach einem der Ansprüche 1 bis 11, **dadurch gekennzeichnet, daß** sie Mittel zur Aufnahme eines Polymers, Mittel zur Ausübung von Druckkraft auf das Polymer, Mittel zur Ausübung von Scherkraft auf das Polymer, Mittel zum Zuführen oder Abführen von Wärme und Mittel zur Bestrahlung des Polymers mit elektromagnetischer Strahlung mit einer definierten Wellenlänge im Bereich von 0,8 bis 100 µm umfaßt.

13. Vorrichtung nach Anspruch 12, **dadurch gekennzeichnet, daß** es sich bei den Mitteln zur Bestrahlung des Polymers mit elektromagnetischer Strahlung mit einer Wellenlänge von 0,8 bis 100 µm um einen Laser handelt.

14. Vorrichtung nach Anspruch 12 oder 13, **dadurch gekennzeichnet, daß** die Mittel zur Ausübung von Scherkraft auf das Polymer zwei relativ zueinander bewegliche Stempelflächen umfassen.

15. Vorrichtung nach einem der Ansprüche 12 bis 14, **dadurch gekennzeichnet, daß** die Mittel zur Ausübung von Druckkraft auf das Polymer auch gleichzeitig die Mittel sind, mit denen Scherkraft auf das Polymer ausgeübt wird.

16. Polymer, umfassend Cellulose oder Chitin, erhältlich nach dem Verfahren nach einem der Ansprüche 1 bis 11.

17. Polymer nach Anspruch 16, **dadurch gekennzeichnet, daß** es als Folie, Faser oder Formkörper vorliegt.

## Claims

1. Method for the plastic deformation of polymers, **characterized in that** a polymer is treated with electromagnetic radiation having a defined wavelength in the range from 0.8 to 100 µm with simultaneous action of pressure, shearing force and thermal energy.

2. Method according to Claim 1, **characterized in that** heat is supplied to the polymer or heat is removed from the polymer during the method.

3. Method according to Claim 1 or 2, **characterized in that** the electromagnetic radiation is laser radiation.

4. Method according to any of Claims 1 to 3, **characterized in that** the electromagnetic radiation has a wavelength in the range from 1 to 50 µm.

5. Method according to any of Claims 1 to 4, **characterized in that** the pressure acting on the polymer is in a range from 1 N/mm² to 5000 N/mm².

6. Method according to any of Claims 1 to 5, **characterized in that** the shearing force is applied such that a shear rate in the range from 10° to 10⁶ s⁻¹ acts on the polymer.

7. Method according to any of Claims 1 to 6, **characterized in that** the polymer comprises a polymer which can form intermolecular hydrogen bridge bonds.

8. Method according to Claim 7, **characterized in that** the polymer which can form intermolecular hydrogen bridge bonds is a polysaccharide or polyvinyl alcohol.

9. Method according to Claim 8, **characterized in that** the polymer which can form intermolecular hydrogen bridge bonds is cellulose, chitin, polyvinyl alcohol, a constitutional isomer of cellulose, a constitutional isomer of chitin or a blend of one or more of the above polymers.

10. Method according to Claim 9, **characterized in that** the polymer which can form intermolecular hydrogen bridge bonds is cellulose.

11. Method according to any of Claims 1 to 10, **characterized in that** the polymer is melted by means of electromagnetic radiation having a wavelength in the range from 0.8 to 100 µm under the simultaneous action of pressure, shearing force and thermal energy and is then extruded to give films, spun to give fibres or processed by injection moulding to give a moulded article.

12. Apparatus for carrying out the method according to any of Claims 1 to 11, **characterized in that** it comprises means for holding a polymer, means for exerting pressure on the polymer, means for exerting shearing force on the polymer, means for supplying or removing heat and means for irradiating the polymer with electromagnetic radiation having a defined wavelength in the range from 0.8 to 100 µm.

13. Apparatus according to Claim 12, **characterized in that** the means for irradiating the polymer with electromagnetic radiation having a wavelength of from 0.8 to 100 µm is a laser.

14. Apparatus according to Claim 12 or 13, **characterized in that** the means for exerting shearing force on the polymer comprises two ram surfaces movable relative to one another.

15. Apparatus according to Claims 12 to 14, **characterized in that** the means for exerting pressure on the polymer are also simultaneously the means for exerting shearing force on the polymer.

16. Polymer comprising cellulose or chitin, obtainable by the method according to any of Claims 1 to 11.

17. Polymer according to Claim 16, **characterized in that** it is present as a film, fibre or moulded article.

## Revendications

1. Procédé de formage plastique de polymères, **caractérisé en ce qu'**un polymère est traité sous l'action simultanée d'une force de pression, d'une force de cisaillement et d'énergie thermique avec un rayonnement électromagnétique d'une longueur d'onde définie dans l'intervalle compris entre 0,8 et 100 µm.

2. Procédé selon la revendication 1, **caractérisé en ce que** pendant le procédé de la chaleur est amenée au polymère ou de la chaleur est évacuée du polymère.

3. Procédé selon la revendication 1 ou 2, **caractérisé en ce que** pour le rayonnement électromagnétique, il s'agit d'un rayonnement laser.

4. Procédé selon l'une des revendications 1 à 3, **caractérisé en ce que** le rayonnement électromagnétique présente une longueur d'onde dans l'intervalle compris entre 1 et 50 µm.

5. Procédé selon l'une des revendications 1 à 4, **caractérisé en ce que** la force de pression agissant sur le polymère est située dans un intervalle compris entre 1 N/mm² et 5000 N/mm².

6. Procédé selon l'une des revendications 1 à 5, **caractérisé en ce que** la force de cisaillement est appliquée de telle manière qu'une vitesse de cisaillement dans l'intervalle compris entre 10° et 10⁶ s⁻¹ agit sur le polymère.

7. Procédé selon l'une des revendications 1 à 6, **caractérisé en ce que** le polymère comprend un polymère qui peut former des liaisons pontées hydrogène intermoléculaires.

8. Procédé selon la revendication 7, **caractérisé en ce que** le polymère qui peut former des liaisons pontées hydrogène intermoléculaires est un polysaccharide ou un alcool de polyvinyle.

9. Procédé selon la revendication 8, **caractérisé en ce que** le polymère qui peut former des liaisons pontées hydrogène intermoléculaires est de la cellulose, de la chitine, un alcool de polyvinyle, un isomère constitutif de la cellulose, un isomère constitutif de la chitine ou un mélange d'un ou de plusieurs des polymères susmentionnés.

10. Procédé selon la revendication 9, **caractérisé en ce que** le polymère qui peut former des liaisons pontées hydrogène intermoléculaires est de la cellulose.

11. Procédé selon l'une des revendications 1 à 10, **caractérisé en ce que** lé polymère entre en fusion sous l'action simultanée d'une force de pression, d'une force de cisaillement et d'énergie thermique avec un rayonnement électromagnétique d'une longueur d'onde dans l'intervalle compris entre 0,8 et 100 µm, et est ensuite extrudé en feuilles, filé en fibres ou transformés en un corps moulé par moulage par injection.

12. Appareil d'exécution du procédé selon l'une des revendications 1 à 11, **caractérisé en ce qu'**il comporte des moyens d'absorption d'un polymère, des moyens d'exercice d'une force de pression sur le polymère, des moyens d'exercice d'une force de cisaillement sur le polymère, des moyens d'amenée ou d'évacuation de chaleur et des moyens d'irradiation du polymère avec un rayonnement électromagnétique d'une longueur d'onde définie dans l'intervalle compris entre 0,8 et 100 µm.

13. Appareil selon la revendication 12, **caractérisé en ce que** pour les moyens d'irradiation du polymère avec un rayonnement électromagnétique d'une longueur d'onde de 0,8 à 100 µm, il s'agit d'un laser.

14. Appareil selon la revendication 12 ou 13, **caractérisé en ce que** les moyens d'exercice d'une force de cisaillement sur le polymère comprennent deux surfaces d'estampage relativement mobiles l'une par rapport à l'autre.

15. Appareil selon l'une des revendications 12 à 14, **caractérisé en ce que** les moyens d'exercice d'une force de pression sur le polymère sont en même temps les moyens par lesquels une force de cisaillement est exercée sur le polymère.

16. Polymère comprenant de la cellulose ou de la chitine, qu'on obtient par le procédé selon l'une des revendications 1 à 11.

17. Polymère selon la revendication 16, **caractérisé en ce qu'**il se présente sous forme d'une feuille, d'une fibre ou d'un corps moulé.
